(19) Europäisches Patentamt
European Patent Office
Office européen des brevets

(11) Publication number: **0 439 763 A2**

(12) **EUROPEAN PATENT APPLICATION**

(21) Application number: **90124226.3**

(22) Date of filing: **14.12.90**

(51) Int. Cl.[5]: **C08L 69/00**, C08K 5/06, //(C08L69/00,71:00)

(30) Priority: **30.01.90 US 472533**

(43) Date of publication of application: **07.08.91 Bulletin 91/32**

(84) Designated Contracting States: **DE FR GB IT**

(71) Applicant: **MOBAY CORPORATION**
**Patent Department Mobay Road**
**Pittsburgh Pennsylvania 15205-9741(US)**

(72) Inventor: **Lundy, Charles E.**
**Bodelschwinghstrasse 20**
**W-4150 Krefeld(DE)**
Inventor: **Krishnan, Sivaram**
**1653 Little Meadow Road**
**Pittsburgh, PA 15241(US)**

(74) Representative: **Gremm, Joachim, Dr. et al**
**Bayer AG Konzernverwaltung RP Patente Konzern**
**W-5090 Leverkusen 1, Bayerwerk(DE)**

(54) **Gamma radiation resistant polyestercarbonate compositions.**

(57) The invention relates to thermoplastic molding compositions which are rendered improved brightness and enhanced resistance to gamma-radiation-induced deterioration. The composition comprise a polyestercarbonate resin and a stabilizing agent.

EP 0 439 763 A2

# GAMMA RADIATION RESISTANT POLYESTERCARBONATE COMPOSITIONS

## Field of the Invention

The invention is directed to polyestercarbonate molding compositions and more particularly, to thermoplastic compositions resistant to gamma radiation.

## Summary of the Invention

The invention relates to thermoplastic polyestercarbonate molding compositions which are rendered improved brightness and resistance to gammaradiation by incorporating therewith about 0.1 to about 5% by weight of a stabilizing agent selected from the group consisting of

I. 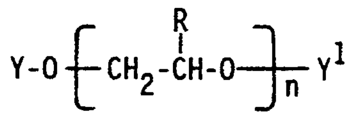 or

II. 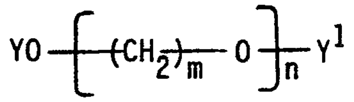

wherein R is a hydrogen or a halogen atom or a $C_1$-$C_{10}$ alkyl, $C_6$-$C_{10}$ aryl, $C_6$-$C_{18}$ arylalkyl or a $C_4$-$C_{10}$ cycloalkyl radical, n is an integer of at least 1 and Y and $Y^1$ independently are a hydrogen atom, an $C_6$-$C_{10}$ aryl, $C_1$-$C_{10}$ alkyl or a $C_6$-$C_{18}$ aralkyl radical or

III. 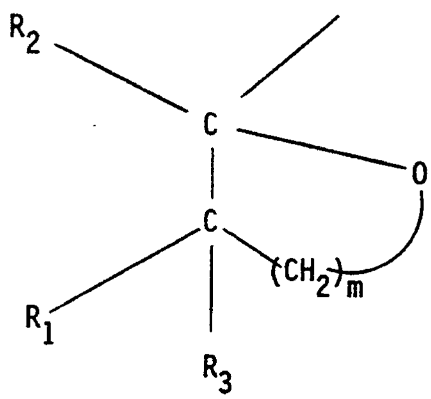 or

IV.

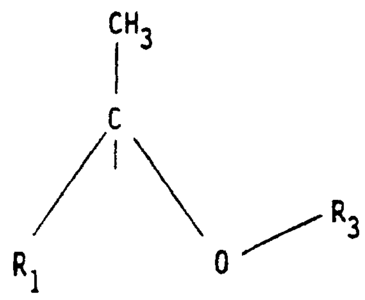

V.

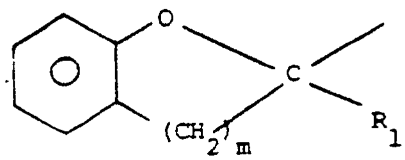

or

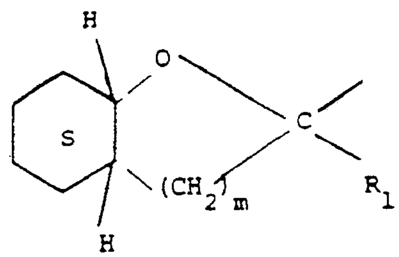

wherein m is 1 or 3-6, $R_1$, $R_2$ and $R_3$ independently are hydrogen atoms or a $C_1$-$C_{10}$ alkyl, $C_6$-$C_{10}$ aryl or a $C_6$-$C_{18}$ arylalkyl radical.

## BACKGROUND OF THE INVENTION

Because of its physical and mechanical properties polyestercarbonate resin was found to be eminently suitable for a variety of applications in the medical field. Applications which require sterilization by exposure to gamma radiation present a problem since polyestercarbonate tends to yellow and show increased haze. The art is noted to include U.S. Patent 4,624,972 which disclosed polycarbonate compositions resistant to gamma radiation containing an ester of an aromatic polycarboxylic acid. European Patent Application 152,012 disclosed a method for increasing the ionizing radiation resistance of polycarbonate by including in the composition a non-polymeric compound which is characterized by a strong oxidizing action and/or reaction at high reaction rate with active species such as E or OH radicals or hydrated electrons formed by ionizing radiation. U.S. Patent 4,451,641 disclosed a container prepared from a copolyester which has been modified with either a dimer acid or a dimer glycol. The copolyester is said to have an improved resistance to gamma radiation. Radiation stable polyolefin compositions have been disclosed in U.S. Patent 4,460,445.

Also relevant in this context is U.S. Patent 3,385,814 which disclosed improved spinning solutions based on linear polycarbonates which contain hydroxy compounds or their ether or ester. Patent Applications, Serial Number 07/305,301, filed February 1, 1989, Serial Number 07/297,264 which was filed January 18, 1989 and 07/403,202, filed September 5, 1989 disclosed relevant compositions which are based on polycarbonate resins. Also relevant in this connection are U.S. Patents 4,873,271 and 4,874,802.

## DETAILED DESCRIPTION OF THE INVENTION

The composition of the invention comprises a polyestercarbonate resin and a stabilizing agent in an amount sufficient to impart brightness to the composition and to enhance its resistance to yellowness and to the formation of haze upon its exposure to gamma radiation. Preferably, the composition contains about .1 to 5.0, preferably .1 to 3.0 percent of the stabilizing agent.

The polyestercarbonate resins useful in the practice of the invention are well known and are available in commerce, for instance under the trademark Apec, from Bayer AG of The Federal Republic of Germany or alternatively from Mobay Corporation. These resins conform structurally to

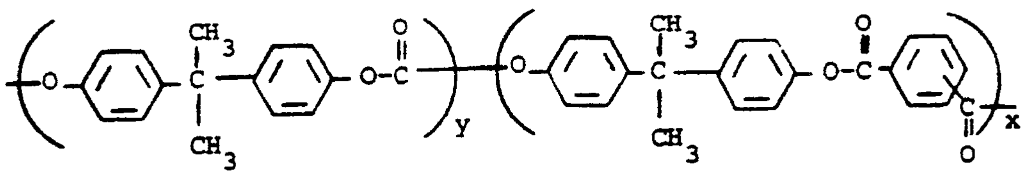

wherein x and y are the molar fractions of the respective blocks, and they each are in the range of about 0.1 to 0.9, with the proviso that $x + y = 1.0$.

The polyestercarbonates of the invention have a weight average molecular weight of 10,000-200,000, preferably 20,000-80,000 and their melt flow rate, per ASTM D-1238 at 300°C, is about 1 to about 65 gm/10 min., preferably about 2-15 gm/10 min. They may be prepared by known methods, for instance such as were disclosed in German DOS- 2,714,544. Suitable polyester carbonates have also been disclosed in German Patents 2,758,030, and 3,016,019 as well as in European Patent 10,840 and in U.S. Patents 3,351,624 and 3,207,814 all incorporated by reference herein. Essentially, the polyestercarbonates of the invention are produced by reacting phthalic acid derivatives - essentially, a mixture of isophthalic and terephthalic acids - with an acid derivative such as phosgene and dihydroxy compounds by polycondensation (see German Offenlegungsschriften 2,063,050; 2,063,052; 1,570,703; 2,211,956; 2,211,957 and 2,248,817; French Patent 1,561,518; and the monograph H. Schnell, "Chemistry and Physics of Polycarbonates", Interscience Publishers, New York, 1964, all incorporated herein by reference).

In the present context, dihydroxy compounds suitable for the preparation of the polycarbonates of the invention conform to the structural formulae (1) or (2)

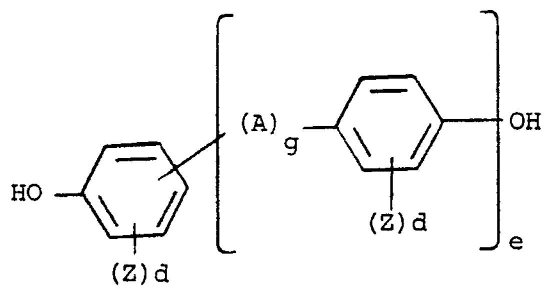

(1)

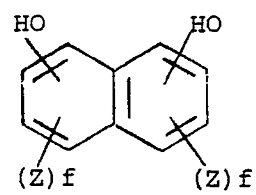

(2)

wherein

A denotes an alkylene group with 1 to 8 carbon atoms, an alkylidene group with 2 to 8 carbon atoms, a cycloalkylene group with 5 to 15 carbon atoms, a cycloalkylidene group with 5 to 15 carbon atoms, a carbonyl group, an oxygen atom, a sulfur atom, -SO- or $SO_2$- or a radical conforming to

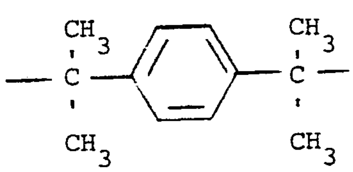

or

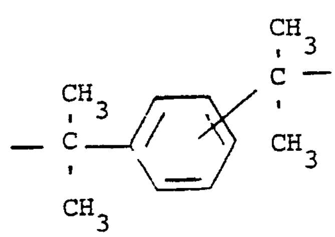

e and g both denote the number 0 to 1;

Z denotes F, Cl, Br or $C_1$-$C_4$-alkyl and if several Z radicals are substituents in one aryl radical, they may be identical or different one from the other;

d denotes an integer of from 0 to 4; and

f denotes an integer of from 0 to 3.

Among the dihydroxy compounds useful in the practice of the invention are hydroquinone, resorcinol,

bis-(hydroxyphenyl) alkanes, bis-(hydroxyphenyl) ethers, bis-(hydroxyphenyl)-ketones, bis-(hydroxyphenyl)-sulfoxides, bis-(hydroxyphenyl)-sulfides, bis-(hydroxyphenyl)-sulfones, and α,α'-bis-(hydroxyphenyl)-diisopropyl-benzenes, as well as their nuclear-alkylated compounds. These and further suitable aromatic dihydroxy compounds are described, for example in U.S. Patents 3,028,356; 2,999,835; 3,148,172; 2,991,273; 3,271,367; and 2,999,846, all incorporated herein by reference. Further examples of suitable bisphenols are 2,2-bis-(4-hydroxyphenyl)-propane (bisphenol A), 2,4-bis-(4-hydroxyphenyl)-2-methylbutane, 1,1-bis-(4-hydroxyphenyl)-cyclohexane, α,α'-bis-(4-hydroxyphenyl)-p-diisopropylbenzene, 2,2-bis-(3-methyl-4-hydroxyphenyl)-propane, 2,2-bis(3-chloro-4-hydroxyphenyl)-propane, bis-(3,5-dimethyl-4hydroxyphenyl)-methane, 2,2-bis-(3,5-dimethyl-4-hydroxyphenyl)-propane, bis-(3,5-dimethyl-4-hydroxyphenyl)-sulfide, bis-(3,5-dimethyl-4-hydroxyphenyl)-sulfoxide, bis-(3,5-dimethyl-4hydroxyphenyl)-sulfone, hydroxybenzophenone, 2,4-bis-(3,5-dimethyl-4-hydroxyphenyl)-cyclohexane, α,α'-bis-(3,5-dimethyl-4-hydroxyphenyl)-p-diisopropylbenzene and 4,4'-sulfonyl diphenyl.

Examples of particularly preferred aromatic bisphenols are 2,2-bis-(4-hydroxyphenyl)-propane, 2,2-bis-(3,5-dimethyl-4-hydroxyphenyl)-propane and 1,1-bis-(4-hydroxyphenyl)-cyclohexane.

The most preferred bisphenol is 2,2-bis-(4-hydroxyphenyl)-propane (bisphenol A).

The polyestercarbonates of the invention may entail in their structure units derived from one or more of the suitable bisphenols.

The polyestercarbonates of the invention may also be branched by condensing therein small quantities, e.g., 0.05-2.0 mol % (relative to the bisphenols) of polyhydroxyl compound. The following are some examples of polyhydroxyl compounds which may be used for this purpose: phloroglucinol; 4,6-dimethyl-2,4,6-tri-(4-hydroxyphenyl)-heptane; 1,3,5-tri-(4-hydroxyphenyl)-benzene; 1,1,1-tri-(4-hydroxyphenyl)-ethane; tri-(4-hydroxyphenyl)-phenylmethane; 2,2-bis-[4,4-(4,4'-dihydroxydiphenyl)-cyclohexyl]-propane; 2,4-bis-(4-hydroxy-1-isopropylidine)-phenol; 2,6-bis-(2'-dihydroxy-5'-methylbenzyl)-4-methylphenol; 2,4-dihydroxy-benzoic acid; 2-(4-hydroxyphenyl)-2-(2,4-dihydroxyphenyl)-propane and 1,4-bis-(4,4'-dihydroxytriphenylmethyl)-benzene. Some of the other polyfunctional compounds are 2,4-dihydroxybenzoic acid, trimesic acid, cyanuric chloride and 3,3-bis-(4-hydroxyphenyl)-2-oxo-2,3-dihydroindole.

In addition to the polycondensation process mentioned above, other processes for the preparation of the polyestercarbonates of the invention are polycondensation in a homogeneous phase and transesterification. The suitable processes are disclosed in the incorporated herein by references U.S. Patents 3,028,365; 2,999,846; 3,153,008; and 2,991,273.

The preferred process for the preparation of polyestercarbonates is the interfacial polycondensation process.

Suitable polyestercarbonate resins are available in commerce, for instance, under the trade name APEC-50, and APEC-80 which are based on bisphenol A and a mixture of phthalic and isophthalic acids and phosgene. These resins differ one from the other in terms of their respective amounts of aromatic ester and are characterized in that their melt flow indices (MFR) per ASTM D-1238 are about 12 to 15 gm/10 min., at 360 degrees C.

The stabilization agent in accordance with the present invention is a monomeric or a polymeric compound conforming structurally to

I. 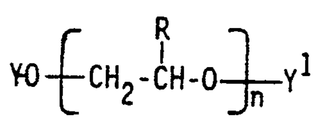 or to

II. 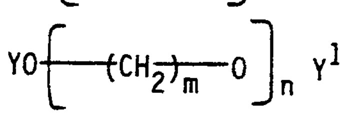

wherein R is a hydrogen or a halogen atom or a $C_1$-$C_{10}$ alkyl, a $C_6$-$C_{10}$ aryl, $C_6$-$C_{18}$ alkylaryl or a $C_4$-$C_{10}$ cycloalkyl radical, n is an integer of at least 1 and preferably 1 to about 100 and Y and $Y^1$ independently are a hydrogen atom, a $C_6$-$C_{10}$ aryl, $C_1$-$C_{10}$ alkyl or a $C_6$-$C_{18}$ alkylaryl or a $C_6$-$C_{18}$ arylalkyl radical or

III.

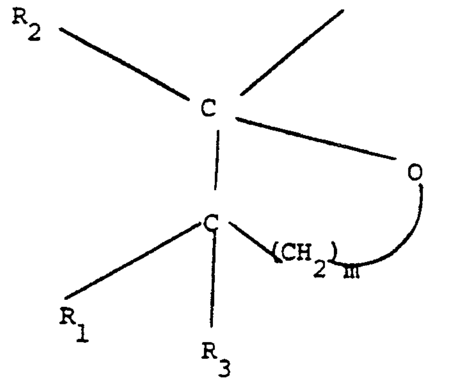

or

IV.

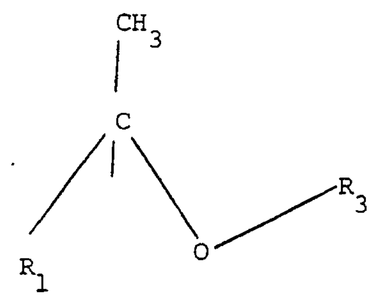

or

V.

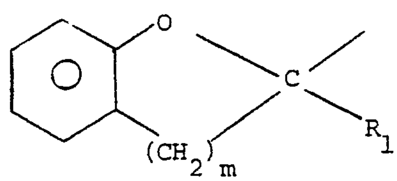

or

VI.

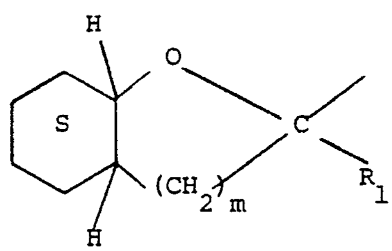

wherein m is 1 or 3-6 and $R_1$, $R_2$ and $R_3$ independently are a hydrogen atom or a $C_1$-$C_{10}$ alkyl, $C_6$-$C_{10}$ aryl or a $C_6$-$C_{18}$ alkylaryl radical.

A preferred stabilizing agent conforms to

Ia. 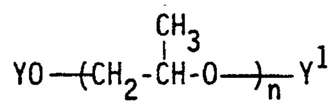

wherein n is about 10 to about 60 and wherein Y and $Y^1$ are identical and denote a hydrogen atom or an end-blocking group conforming to formula III or IV.

The stabilizing agents of the invention conforming to the embodiments where Y and $Y^1$ are hydrogen atoms are commercially available compounds, for instance, under the tradename Multranol from Mobay Corporation. The preparation of the preferred, end-blocked embodiment is demonstrated below. Among the more preferred embodiments of the stabilizing agent are the compounds of formula Ia wherein Y and $Y^1$ denote end blocking groups derived from ethyl vinyl ether, or dihydropyran.

The preferred end blocked stabilizer of the invention offers certain advantages over its unblocked counterpart - the embodiment where Y's are hydrogen atoms - since it is inert.

The preparation of the preferred dihydropyran end-capped stabilizer is shown schematically as

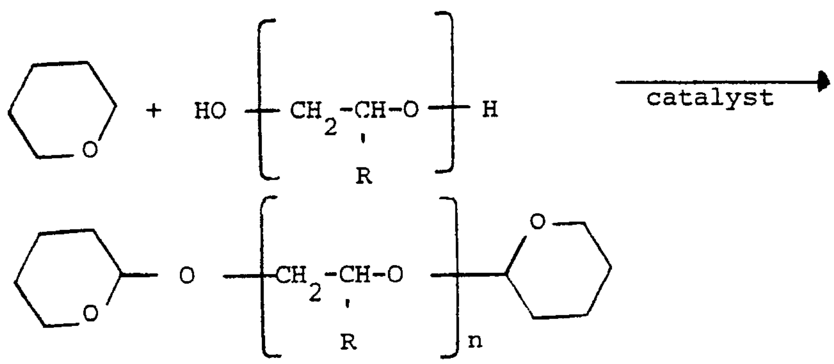


where R is as defined for Formula I and II above and where the catalyst is a Lewis acid such as toluene sulfonic acid, HCl or a benzene sulfonic acid.

The invention is further illustrated but is not intended to be limited by the following examples in which all parts and percentages are by weight unless otherwise specified.

## EXAMPLES

### EXAMPLE 1 Preparation of a DHP end-blocked stabilizer.

A polyether conforming structurally to Formula VII above (300 grams) was dissolved in 400 ml of tetrahydrofuran in a 100 ml three-necked flask. 0.25 grams of p-toluene sulfonic acid - a catalyst - was then added and the mixture stirred. After complete dissolution there was slowly added dihydropyran (26.4 g). A 5 degree exotherm occurred, raising the final temperature to about 60 ° C. The temperature was then raised to reflux for 8 additional hours. Afterward an appropriate amount of triethylamine was added to the solution to remove excess acid. The solution was then filtered and vacuum distilled to remove any unreacted dihydropyran and tetrahydrofuran from the product.

### EXAMPLE 2

Compositions of the invention containing the end-blocked stabilizers prepared in accordance with Example 1 above were prepared and evaluated as to their optical properties both before and after exposure to gamma radiation. The Table below summarize the results of the evaluation and includes a comparison between compositions containing no stabilizer and composition containing 0.5%, 1.0% and 1.5% of the stabilizer. In Table 1 the polyestercarbonate resins were APEC-50 and APEC-80 the structure and characteristics of which were described above. In the experiments, the compositions were molded conventionally and the test specimens were prepared by injection molding. The test specimens were

exposed to gamma radiation doze of 5 Mrad by Cobalt 60 radiation source.

Table 1

| Composition | Yellowness Index | |
|---|---|---|
| | After molding | After exposure to gamma Radiation |
| Apec-50* (control) | 7.44 | 7.9 |
| Apec-50 + 0.5% additive | 6.23 | 7.2 |
| Apec-50 + 1.0% additive | 6.33 | 6.9 |
| Apec-50 + 1.5% additive | 5.47 | 6.6 |
| Apec-80** (control) | 6.89 | -- |
| Apec-80 + 1.0% additive | 6.09 | 11.7 |
| Apec-80 + 1.5% additive | 5.49 | 11.4 |

The compositions of the invention may be prepared by following conventional procedures for the preparation of molding compositions. The stabilizing agent may be introduced by directly mixing it with the polyestercarbonate resin. Other conventional additives may also be incorporated in the composition for their art-recognized utility. These include release agents, plasticizers, stabilizers, antioxidants, fillers, reinforcements and the like.

The thermoplastic molding composition of the invention is characterized in that the polyestercarbonate resin component is substantially amorphous and in that in the absence of pigments or dyes, it has a light transmission greater than 75% and in that it is virtually free from haze.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

**Claims**

**1.** A thermoplastic molding composition comprising

(i) a substantially amorphous aromatic polyestercarbonate resin conforming structurally to

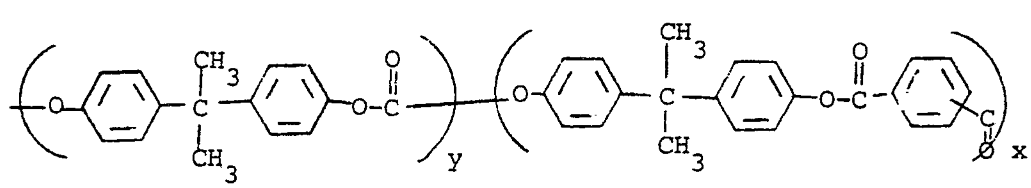

wherein x and y denote molar fractions and independently are 0.1 to 0.9 and where x + y = 1.0 and

(ii) a stabilizing agent selected from the group consisting of

I. 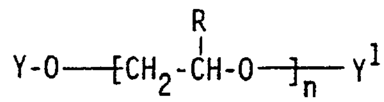

and

II. $YO-[(CH_2)_m-O]_n-Y^1$

wherein R is a hydrogen or a halogen atom or a $C_1$-$C_{10}$ alkyl, $C_6$-$C_{10}$ aryl, $C_6$-$C_{18}$ arylalkyl or a $C_4$-$C_{10}$ cycloalkyl radical, Y and $Y^1$ are independently a hydrogen atom, a $C_1$-$C_{10}$ alkyl, $C_6$-$C_{10}$ aryl or $C_6$-$C_{18}$ arylalkyl radical or

III. 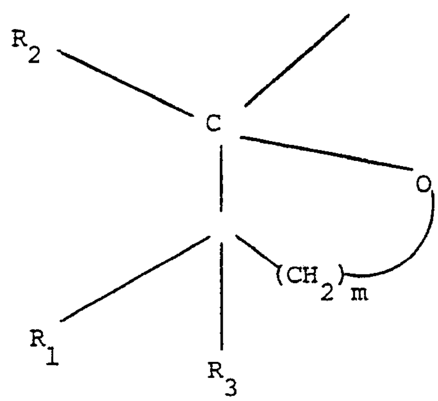

IV. 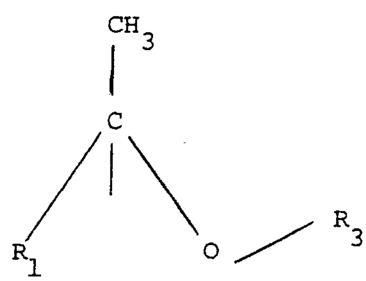

V.

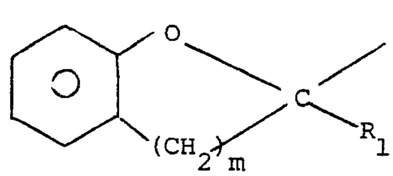

or

VI.

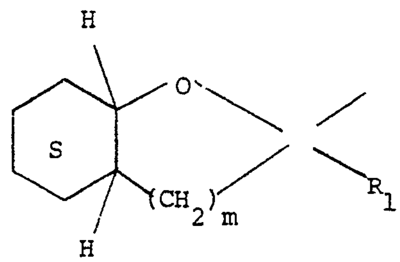

wherein m is 1 or 3-6, $R_1$, $R_2$ and $R_3$ independently are a hydrogen atom or a $C_1$-$C_{10}$ alkyl, $C_6$-$C_{10}$ aryl or a $C_6$-$C_{18}$ arylalkyl radical and n is about 1 to 100, said stabilizing agent being present in sufficient amount to enhance the resistance of said resin to the gamma-radiation-induced deterioration of its optical properties.

2. The composition of Claim 1 wherein said sufficient amount is about 0.1 to 5.0 percent relative to the weight of the composition.

3. The composition of Claim 1 wherein said stabilizing agent conforms to

$$HO-\left[CH_2-\underset{}{\overset{CH_3}{\overset{|}{CH}}}-O\right]_n-H$$

wherein n is about 35.

4. The composition of Claim 1 wherein said stabilizing agent conforms to.

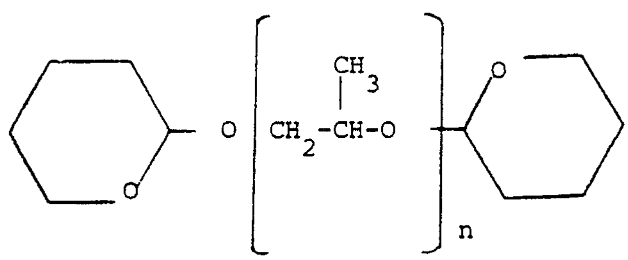

wherein n is about 35.

5. The composition of Claim 1 wherein said polyestercarbonate is characterized in that its weight average molecular weight is about 10,000 to 200,000.

6. The composition of Claim 1 wherein said stabilizing agent is present in an amount of about .1 to 1.0 percent relative to the weight of said composition.

7. A thermoplastic molding composition comprising
(i) an aromatic polyestercarbonate resin and
(ii) a stabilizing agent conforming to

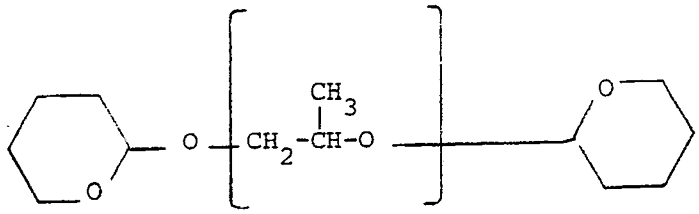

wherein n = 35, said stabilizing agent being present in a sufficient amount to enhance the resistance of said resin to gamma-radiation-induced deterioration of its optical properties.

**8.** The composition of Claim 1 wherein said stabilizing agent is present in an amount of 0.1 to 3 percent relative to the weight of said composition.